# EUROPÄISCHE PATENTSCHRIFT

(11) **EP 1 025 968 B1**
(45) Veröffentlichungstag und Bekanntmachung des Hinweises auf die Patenterteilung: **03.11.2004**
(21) Anmeldenummer: 99102360.7
(22) Anmeldetag: 06.02.1999
(51) Int. Cl.: B27M 3/00, G01B 11/06, B27G 11/00

(54) **Verfahren und Einrichtung zur Leimerkennung**
Method and apparatus for detecting glue
Procédé et appareil pour la détection de colle

(43) Veröffentlichungstag der Anmeldung: 09.08.2000
(73) Patentinhaber: M.T.E. Marketing - Technik - Engineering AG, 4410 Liestal (CH)
(72) Erfinder: Kropf, Kurt, 3132 Riggisberg (CH); Hostettler, Andreas, 3183 Alblingen (CH)
(74) Vertreter: von Puttkamer, Nikolaus, Dipl.-Ing.

(56) Entgegenhaltungen:
- US-A- 4 128 119
- US-A- 4 814 198
- US-A- 4 841 156

## Beschreibung

Die vorliegende Erfindung betrifft ein Verfahren zur Überprüfung des Leimauftrages auf Stirnflächen von miteinander zu verleimenden Werkstücken aus Holz während des automatisierten Fördervorganges von vereinzelten Werkstücken zwischen einer Beleimungsstation und einer Presse zum Aneinanderpressen der miteinander zu verleimenden Stirnflächen von Werkstücken, sowie eine Einrichtung zur Durchführung dieses Verfahrens in einer Anlage zum Verleimen von Werkstücken aus Holz, insbesondere Keilzinkstücken, zur Bildung einer Stange, mit Fördervorrichtungen, einer Beleimungsstation und einer Presse zum Zusammenpressen der miteinander zu verleimenden Werkstücke.

Bei bekannten Verleimungsanlagen wurden zur Leimerkennung bereits Kameras eingesetzt. Bei dieser Technik der Leimauftragsüberwachungen werden je nach dem Anwendungszweck hell/dunkel-Kontraste, Farbunterschiede und/oder Aenderungen in der Oberflächenstruktur unterschieden. Nachteilig bei diesen Verfahren ist jedoch die ungenügende Genauigkeit resp. die der Leimerkennung unterliegenden grossen Schwankungen, hervorgerufen durch die grossen Farb- und Strukturunterschiede der Werkstücke aus Holz, welche wegen des aufgetragenen weissen, beinahe transparenten Leimes die optische Erkennung stören. Die Veränderung der Leimfarbe durch das Einfärben mit einer Farbpaste wäre unakzeptabel, da die beigemischte Farbe bei dem fertig verleimten Produkt und dem daraus hergestellten Endprodukt sichtbar wäre.

Aufgabe der vorliegenden Erfindung war es, ein Verfahren und eine Einrichtung zu entwickeln, welche die heutigen Nachteile vermeiden.

Diese Aufgabe wurde bei einem Verfahren und einer Einrichtung der eingangs definierten Art erfindungsgemäss durch die Merkmale der kennzeichnenden Teile der Patentansprüche 1 bzw. 2 gelöst.

Der eigentliche Kern der Erfindung liegt in der Leimerkennung unter Verwendung eines UV-Indikators, d.h. eines fluoreszierenden Additives, welches dem Leim beigemischt wird.

Die erfindungsgemässe Leimerkennung unterliegt praktisch keinen Schwankungen. Der dem Leim beigemischte UV-Indikator ist unsichtbar im normalen Licht (die Leimschicht fluoresziert nur während einer vorbestimmten Dauer nach Beleuchtung mittels einer UV-Lichtquelle).

Da der UV-Indikator langfristig nicht säurestabil ist, d.h. bei Zumischung zu einem sauren Härter würde der Indikator den grössten Teil seiner Aktivität verlieren, wird der Indikator dem Leim, insbesondere einem sog. Weissleim, und nicht dem Härter beigemischt. Der Härter wird dann erst kurz vor der Verwendung beigegeben.

Als Leim (Weissleim) wird vorzugsweise ein PVAC (Polyvinylacetat) inklusive einem sauren Härter verwendet.

Die Erfindung wird nachstehend anhand eines Ausführungsbeispiels noch etwas näher erläutert, teilweise unter Hinweis auf die Zeichnung, in welcher:
Fig. 1 rein schematisch eine sog. Keilzinkanlage mit eingebauter erfindungsgemässer Einrichtung und
Fig. 2 ebenfalls rein schematisch ein Detail der erfindungsgemässen Einrichtung zeigen.

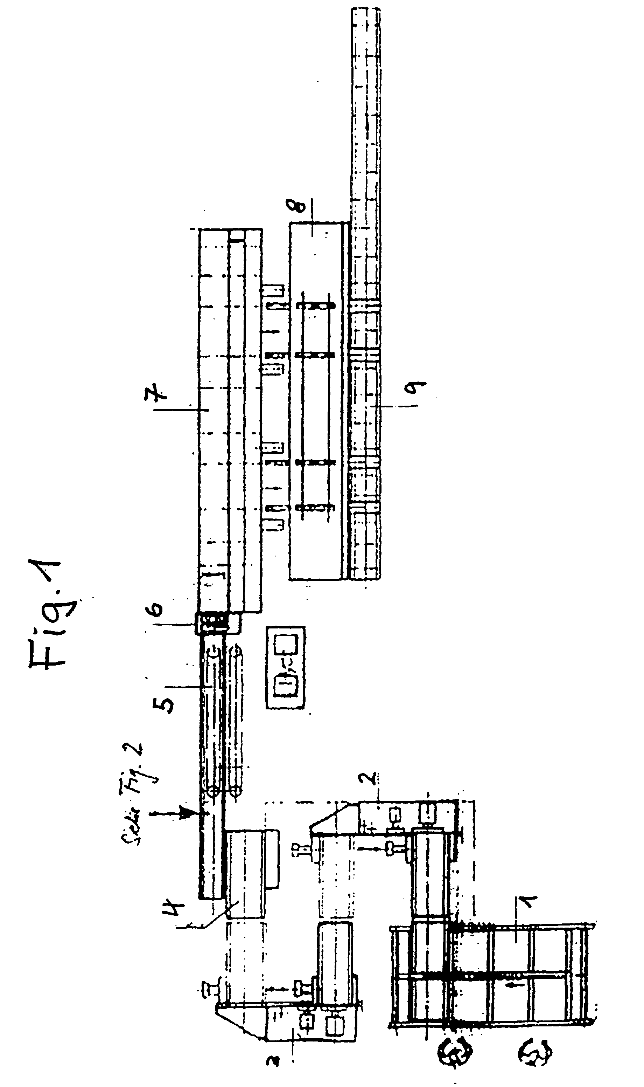

Das Rohmaterial wird mittels einer Kappanlage (nicht dargestellt) zu Fixlängen und Keilzinkstücken gekappt. Fig. 1 der Zeichnung zeigt den Produktionsablauf in einer sog. Keilzinkanlage, in welcher anschliessend an den Kappvorgang die anfallenden Keilzinkstücke (Holz) über übliche Keilzinkverbindungen z.B. zu 6 m langen Stangen verleimt werden. Dazu müssen vorbestimmte Stirnflächen der Keilzinkstücke K beleimt werden. Die Überprüfung des Beleimungsvorganges stellt den eigentlichen Gegenstand der Erfindung dar.

Ausgehend von einer Beschichtungseinheit 1 werden die unterschiedlich langen Keilzinkstücke K über ein Querförderband in dem Fräsaggregat 2 keilgezinkt. Derselbe Vorgang findet für die andere Stirnseite der Keilzinkstücke statt, nur dass zusätzlich zur Fräsung der einseitige Leimauftrag in der Station 3 anschliessend erfolgt.

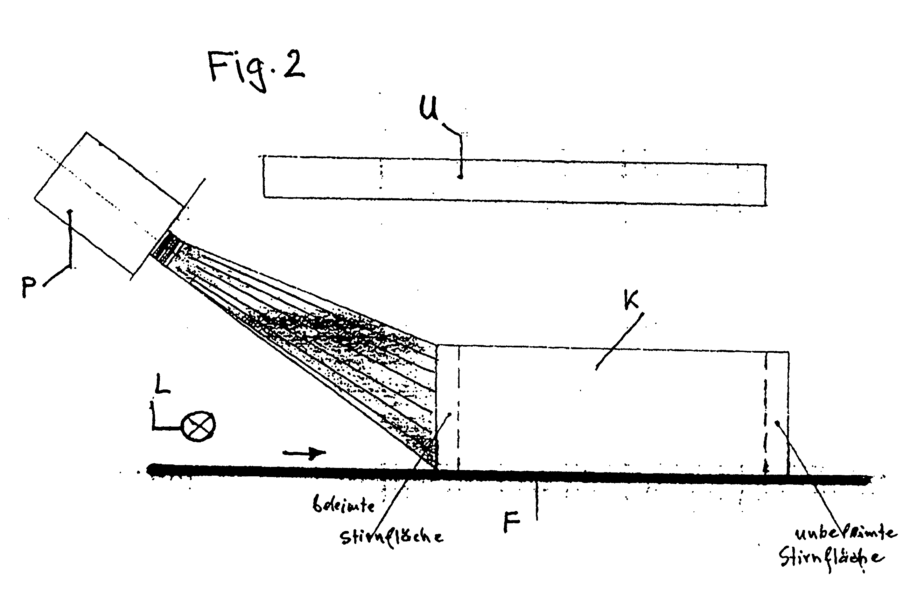

Nach erfolgtem Leimauftrag in der Station 3 werden die Keilzinkstücke quergefördert und an der Stelle 4 vereinzelt. Danach passieren die einzelnen Keilzinkstücke K eine Lichtschranke L (Fig. 2), welche mittels eines Kontrollers (nicht dargestellt) die exakte Identifikation jedes Keilzinkstückes K gewährleistet. Anschliessend wird jeder keilgezinkte Querschnitt durch eine UV-Lampe U (Fig. 2) beleuchtet. Dabei beginnt der aufgetragene Weissleim zu fluoreszieren. Das Werkstück wird auf dem Förderband F weiterbefördert.

Die Kamera P erfasst nun innerhalb eines genau definierten Querschnittes den fluoreszierenden Leim und erkennt, ob überhaupt bzw. ob genügend Leim aufgetragen wurde (Fig. 2).

Mit dem Förderband 5 gelangen die kontrollierten Keilzinkstücke K über die Kappstation 6 (nach 6 m wird gekappt) in die Taktpresse 7, welche die Keilzinkstücke zu 6 m-Stangen verpresst. Nach erfolgter Verpressung gelangen die Stangen über einen Querförderer 8 in den Einzug für die Hobelanlage 9.

Aufgabe des Systems ist es, den Leimauftrag auf jedem keilgezinkten Querschnitt zu überprüfen (100 %-Überwachung). Zu diesem Zweck wird dem Weissleim (nicht dem Härter) ca. 0,5 % Indikator (Fluoresceinnatrium) beigemischt. Die Menge ist abhängig von der Empfindlichkeit der Kamera und der Wellenlänge und Stärke der UV-Lampe.

Würde der Weissleim keinen Indikator enthalten, so würde die Erkennung sehr grossen Schwankungen entsprechend den grossen Farb- und Strukturunterschieden der einzelnen Werkstücke unterliegen. Die Beimischung eines Farbstoffes (z.B. blau) ist unakzeptabel, da die Farbe bei dem fertig verleimten Produkt und dem daraus hergestellten Endprodukt sichtbar wäre.

## Patentansprüche

1. Verfahren zur Überprüfung des Leimauftrages auf Stirnflächen von miteinander zu verleimenden Werkstücken (k) aus Holz während des automatisierten Fördervorganges von vereinzelten Werkstücken zwischen einer Beleimungsstation und einer Presse zum Aneinanderpressen der miteinander zu verleimenden Stirnflächen von Werkstücken, **dadurch gekennzeichnet, dass** dem Leim vor dem Auftrag ein Indikator in Form eines Fluoreszenzmittels beigemischt wird, dass nach der Beleimungsstation die für Leimauftrag vorgesehenen Werkstückflächen mittels einer UV-Lichtquelle (U) beleuchtet werden, um den Indikator zu aktivieren bzw. zum Fluoreszieren zu bringen, und dass danach mittels einer Kamera (P) jede der genannten Werkstückflächen daraufhin überprüft wird, ob diese fluoreszieren oder nicht, wobei bei Erkennung eines Ausbleibens bzw. einer ungenügenden Beleimung ein Signal ausgelöst wird, welches auf den fehlenden oder ungenügenden Leimauftrag aufmerksam macht und gegebenenfalls den Fördervorgang stoppt.

2. Verfahren nach Anspruch 1, **dadurch gekennzeichnet, dass** dem Leim, insbesondere einem Weissleim, Fluoresceinnatrium als Indikator beigemischt wird.

3. Verfahren nach Anspruch 1 oder 2, **dadurch gekennzeichnet, dass** dem mit Indikator vermischten Leim der ggf. erforderliche Härter erst kurz vor Verwendung des Leims beigemischt wird.

4. Einrichtung zur Durchführung des Verfahrens nach einem der Ansprüche 1-3, in einer Anlage zum Verleimen von Werkstükken aus Holz, insbesondere Keilzinkstücken, zur Bildung einer Stange, mit Fördervorrichtungen (F), einer Beleimungestation (3) und einer Presse (7) zum Zusammenpressen der miteinander zu verleimenden Werkstücke, **dadurch gekennzeichnet, dass** die Beleimungsstation zum Aufbringen auf vorbestimmte Werkstückflächen von Leim mit einem Zusatz an Indikator in Form eines Fluoreszenzmittels vorgesehen ist, dass eine UV-Lichtquelle angeordnet ist, um den Indikator im aufgetragenen Leim zu aktivieren, und dass eine Kamera (P) der UV-Lichtquelle nachgeschaltet ist, um vor der Presse das Vorhandensein von Leim auf den mit Leim zu versehenden Flächen festzustellen.

## Claims

1. A method for checking the application of glue to end faces of wooden workpieces (k) to be glued together during the automated conveying operation of separated workpieces between a gluing station and a press for pressing together the end faces of workpieces to be glued together,
**characterised in that** an indicator in the form of a fluorescence agent is mixed to the glue prior to application,
**in that** after the gluing station the workpiece faces provided for the application of glue are illuminated by means of a UV light source (U) in order to activate the indicator or to make it fluoresce,
**and in that** afterwards each of the said workpiece faces are checked by means of a camera (P) to establish whether they fluoresce or not, in which case if the absence of gluing or inadequate gluing is detected a signal is triggered which draws attention to the missing or unsatisfactory application of glue and if necessary stops the conveying operation.

2. A method according to Claim 1,
**characterised in that** fluorescein sodium is mixed as an indicator with the glue, in particular a white glue.

3. A method according to Claim 1 or 2,
**characterised in that** the hardening agent that is possibly required is mixed with the glue mixed with the indicator only shortly prior to the use of the glue.

4. An apparatus for performing the method according to one of Claims 1 to 3, in an installation for gluing wooden workpieces, in particular dovetail parts, to form a rod, having conveying devices (F), a gluing station (3) and a press (7) for pressing together the workpieces to be glued together,
**characterised in that** the gluing station for the application of glue to predetermined workpiece surfaces is provided with an addition of indicator in the form of a fluorescence agent,
**in that** a UV light source is provided in order to activate the indicator in the applied glue,
**and in that** a camera (P) is connected after the UV light source in order to establish the presence of glue on the faces to be provided with glue in front of the press.

## Revendications

1. Procédé pour le contrôle de l'application de colle sur des surfaces frontales de pièces en bois (K) à assembler par collage, pendant le processus de transport automatisé de pièces individuelles entre un poste d'application de colle et une presse pour presser l'une contre l'autre les faces frontales de pièces à assembler par collage, **caractérisé par le fait que** l'on ajoute à la colle, avant application, un indicateur sous la forme d'un agent fluorescent, **par le fait qu'**en aval du poste d'application de colle on illumine à l'aide d'une source de lumière UV (U) les surfaces de pièce devant recevoir de la colle, aux fins d'activer l'indicateur ou de le faire entrer en fluorescence, et **par le fait qu'**ensuite on examine à l'aide d'une caméra (P) si chacune desdites surfaces de pièce est fluorescente ou non, un signal qui avertit de l'absence de colle ou d'une application de colle insuffisante, et stoppe le processus de transport le cas échéant, étant déclenché lorsqu'une absence de colle ou une application de colle insuffisante est détectée.

2. Procédé selon la revendication 1, **caractérisé par le fait que** l'on incorpore à la colle, notamment à de la colle blanche, de la fluorescéine sodique comme indicateur.

3. Procédé selon la revendication 1 ou 2, **caractérisé par le fait que** le durcisseur éventuellement nécessaire est incorporé à la colle mélangée à l'indicateur juste avant l'utilisation de la colle.

4. Dispositif pour la mise en oeuvre du procédé selon une des revendications 1-3 dans une installation de collage de pièces en bois, notamment de pièces à dents collées, pour former une barre, comportant des dispositifs de transport (F), un poste d'application de colle (3) et une presse (7) pour presser l'une contre l'autre les pièces à assembler par collage, **caractérisé par le fait que** le poste d'application de colle est prévu pour appliquer sur des surfaces de pièce prédéterminées de la colle additionnée d'un indicateur sous la forme d'un agent fluorescent, **par le fait qu'**il est prévu une source de lumière UV pour activer l'indicateur dans la colle appliquée et **par le fait qu'**une caméra (P) est disposée en aval de la source de lumière UV aux fins de révéler la présence de colle sur les surfaces devant être encollées avant l'entrée dans la presse.
